(19) Europäisches Patentamt / European Patent Office / Office européen des brevets

(11) **EP 4 592 362 A1**

(12) **EUROPEAN PATENT APPLICATION**
published in accordance with Art. 153(4) EPC

(43) Date of publication:
**30.07.2025 Bulletin 2025/31**

(21) Application number: **23868276.9**

(22) Date of filing: **22.09.2023**

(51) International Patent Classification (IPC):
**C08L 101/14** *(2006.01)*   **C08K 5/5317** *(2006.01)*
**H01B 7/288** *(2006.01)*

(52) Cooperative Patent Classification (CPC):
**C08K 5/5317; C08L 101/14; H01B 7/288**

(86) International application number:
**PCT/JP2023/034413**

(87) International publication number:
**WO 2024/063155 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.09.2022 JP 2022151858**

(71) Applicant: **Sumitomo Seika Chemicals Co., Ltd.**
**Kako-gun, Hyogo 675-0145 (JP)**

(72) Inventor: **TAKEUCHI, Sahomi**
**Himeji-shi, Hyogo 672-8076 (JP)**

(74) Representative: **Vossius & Partner**
**Patentanwälte Rechtsanwälte mbB**
**Siebertstrasse 3**
**81675 München (DE)**

(54) **WATER-ABSORBING RESIN COMPOSITION, WATER-STOPPING MATERIAL, AND CABLE**

(57) Provide are a water-absorbent resin composition that has excellent heat resistance after swelling, a water-blocking material and a cable comprising the composition.

The water-absorbent resin composition of the present invention comprises water-absorbent resin particles and a phosphonic acid-based chelating agent, the phosphonic acid-based chelating agent being contained in an amount of 0.01 to 40 µmol per gram of the water-absorbent resin particles. The water-absorbent resin composition of the present invention has excellent heat resistance after swelling.

EP 4 592 362 A1

# Description

Technical Field

The present invention relates to a water-absorbent resin composition, a water-blocking material, and a cable.

Background Art

Water-absorbent resins have excellent water absorption ability and can exert a water-blocking effect. Therefore, water-absorbent resins are known to find various applications in which water-blocking properties are required. For example, water-absorbent resins are used as water-blocking materials for power cables and communication cables such as optical cables.

Patent Literature (PTL) 1 discloses a technique of a water-blocking material wherein a water-absorbent sheet including a water-absorbent resin is enclosed in an external material to prevent a gel of the water-absorbent resin swollen by water absorption from seeping out.

Citation List

Patent Literature

PTL 1: JP2014-147281A

Summary of Invention

Technical Problem

It is important that a water-absorbent resin used in a water-blocking material described above (e.g., a water-blocking tape) has swelling ability (water-blocking ability) that makes it possible to immediately stop water seepage and also has excellent heat resistance even after swelling, i.e., a property in which the gel (swollen water-absorbent resin) is less likely to deteriorate by heat generated by a cable.

The present invention has been accomplished in view of the above. An object of the present invention is to provide a water-absorbent resin composition that has excellent heat resistance after swelling, a water-blocking material and a cable comprising the composition.

Solution to Problem

The present inventors conducted extensive research to achieve the above object and found that the object can be achieved by combining water-absorbent resin particles and a phosphonic acid-based chelating agent in a predetermined ratio. The present invention has been accomplished based on this finding.

Specifically, the present invention includes, for example, the subject matter described in the following items.

Item 1

A water-absorbent resin composition comprising:

water-absorbent resin particles; and
a phosphonic acid-based chelating agent,
the phosphonic acid-based chelating agent being contained in an amount of 0.01 to 40 $\mu$mol per gram of the water-absorbent resin particles.

Item 2

The water-absorbent resin composition according to Item 1, which has a 30-second swelling height of 6.0 mm or more.

Item 3

A water-blocking material comprising the water-absorbent resin composition of Item 1 or 2.

Item 4

A cable comprising the water-blocking material of Item 3.

Advantageous Effects of Invention

The water-absorbent resin composition of the present invention has excellent heat resistance after swelling.

Brief Description of Drawings

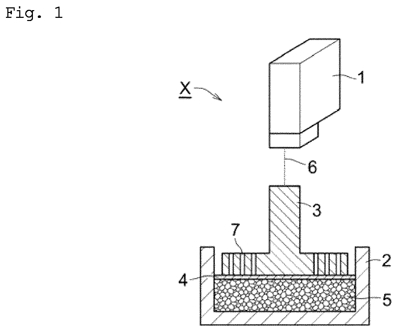

Fig. 1 is a schematic view of a measurement apparatus used for measuring the swelling height of a water-absorbent resin composition.

Description of Embodiments

Embodiments of the present invention are described in detail below. In the present specification, the terms "comprising" and "containing" include the concepts of "comprising," "containing," "consisting essentially of," and "consisting of."

In the numerical range described in stages in the present specification, the upper or lower limit of the numerical range at one stage can be optionally combined with the upper or lower limit of the numerical range at another stage. In the numerical range described in the present specification, the upper or lower limit of the numerical range may be replaced with a value shown in the Examples or a value that can be uniquely derived from the Examples. Further, in the present specification, the numerical values connected by "to" mean the numerical range including the numerical values before and after "to" as the lower limit and the upper limit.

1. Water-absorbent Resin Composition

The water-absorbent resin composition of the present invention comprises water-absorbent resin particles and a phosphonic acid-based chelating agent, the phosphonic acid-based chelating agent being contained in an amount of 0.01 to 40 $\mu$mol per 1 g (= 1 gram) of the water-absorbent resin particles.

The water-absorbent resin composition of the present invention has excellent heat resistance after swelling. That is, when a cable is damaged, the water-absorbent resin composition of the present invention swells inside the cable due to water that seeps in from the outside, but in the swollen state (gel state), the gel is less likely to deteriorate even in a high-temperature environment. For example, in the swollen state of the water-absorbent resin composition, the gel formed by swelling is one in which the decrease in gel viscosity is suppressed more than that of conventional water-absorbent resins, even in a high-temperature environment. Thus, the water-absorbent resin composition of the present invention can be suitably used for various water-blocking materials, and such water-blocking materials are particularly suitable for cable applications.

In the present invention, the superiority or inferiority of the heat resistance of the water-absorbent resin composition can be determined by storing a gel of the water-absorbent resin composition swollen 50-fold for a predetermined period at 90°C and examining the degree of decrease in gel viscosity during this storage period. The heat resistance of the water-absorbent resin composition can be more efficiently determined according to the measurement conditions detailed in the section "Measurement of Gel Viscosity Retention."

Water-absorbent Resin Particles

The water-absorbent resin particles contained in the water-absorbent resin composition of the present invention are a resin that is swellable with water and are a material that can be a main component of the water-absorbent resin composition.

In particular, the water-absorbent resin particles contained in the water-absorbent resin composition of the present invention particularly preferably have a crosslinked surface structure. In this case, the water-absorbent resin composition is particularly likely to possess increased heat resistance and improved water-blocking ability. The water-absorbent resin particles having a crosslinked surface structure can be formed by treating the water-absorbent resin particles with a post-crosslinking agent described later (i.e., the water-absorbent resin particles are preferably produced through the post-crosslinking step described later). The water-absorbent resin particles may have a structure in which the inside is crosslinked with an internal-crosslinking agent described later.

The water-absorbent resin particles as described above can be formed, for example, from a polymer (in particular, a crosslinked polymer) of a water-soluble ethylenically unsaturated monomer. In this case, the water-absorbent resin composition not only imparts excellent water-blocking ability when used as a water-blocking material, but is also likely to possess increased heat resistance.

The water-soluble ethylenically unsaturated monomer for use is, for example, selected from a wide range of known monomers usable in typical water-absorbent resins. Examples of the water-soluble ethylenically unsaturated monomer include (meth)acrylic acid (in the present specification, "acrylic" and "methacrylic" are together referred to as "(meth)acrylic"; the same applies below) and salts thereof; 2-(meth)acrylamide-2-methylpropanesulfonic acid and salts thereof; nonionic monomers, such as (meth)acrylamide, N,N-dimethyl (meth)acrylamide, 2-hydroxyethyl (meth)acrylate, N-methylol (meth)acrylamide, and polyethylene glycol mono(meth)acrylate; amino group-containing unsaturated monomers, such as N,N-diethylaminoethyl (meth)acrylate, N,N-diethylaminopropyl (meth)acrylate, and diethylaminopropyl (meth)acrylamide, and quaternized products thereof; and the like. These water-soluble ethylenically unsaturated monomers may be used singly, or (copolymerized) in a combination of two or more. In particular, from the standpoint of more easily achieving the effects of the present invention, (meth)acrylic acid and salts thereof, (meth)acrylamide, and N,N-dimethyl acrylamide are preferable; and (meth)acrylic acid and salts thereof are more preferable.

When acrylic acid or a salt thereof is used as such a water-soluble ethylenically unsaturated monomer, the acrylic acid or a salt thereof is used as the main water-soluble ethylenically unsaturated monomer, and the amount of the acrylic acid or a salt thereof is preferably 70 to 100 mol%, based on the total number of moles of the water-soluble ethylenically unsaturated monomers used.

When the water-soluble ethylenically unsaturated monomer described above is subjected to the reversed-phase suspension polymerization described later, the monomer may be used in the form of an aqueous solution, in order to increase the dispersion efficiency in a hydrocarbon dispersion medium. The concentration of the monomer in such an aqueous solution is not particularly limited and is typically 20 mass% or more and the saturated concentration or less, preferably 25 to 90 mass%, and more preferably 30 to 85 mass%.

When the water-soluble ethylenically unsaturated monomer has an acid group, like (meth)acrylic acid or 2-(meth)acrylamide-2-methylpropanesulfonic acid, the acid group of the water-soluble ethylenically unsaturated monomer for use may be neutralized with an alkaline neutralizer beforehand, as necessary. Examples of such alkaline neutralizers include, but are not particularly limited to, alkali metal salts, such as sodium hydroxide, sodium carbonate, sodium hydrogen carbonate, potassium hydroxide, and potassium carbonate; ammonia; and the like. In particular, these alkaline neutralizers may be used in the form of an aqueous solution in order to simplify the neutralization operation. These alkaline neutralizers may be used singly, or in a combination of two or more.

The degree of neutralization of the water-soluble ethylenically unsaturated monomer with an alkaline neutralizer is not particularly limited. In order to increase the water-absorption capacity by increasing the osmotic pressure of the resulting water-absorbent resin particles and to avoid safety problems that may arise due to the presence of an excess of alkaline neutralizer, the degree of neutralization of the water-soluble ethylenically unsaturated monomer with an alkaline neutralizer is typically preferably 10 to 100 mol%, and more preferably 30 to 80 mol%, of all acid groups in the water-soluble ethylenically unsaturated monomer.

The water-absorbent resin particles can be produced, for example, by a production method comprising performing a polymerization reaction using a raw material containing the water-soluble ethylenically unsaturated monomer (hereinafter, referred to as "the polymerization step").

Examples of the polymerization reaction performed in the polymerization step include reversed-phase suspension polymerization, aqueous solution polymerization, emulsion polymerization, and the like. From the standpoint of easily adjusting the 30-second swelling height of the water-absorbent resin composition to a predetermined range, reversed-phase suspension polymerization is preferably used in the polymerization step. The reversed-phase suspension polymerization refers to, for example, a method in which a poorly soluble monomer with respect to a dispersion medium is suspended in the dispersion medium in the presence of a dispersion stabilizer, and polymerized. The reversed-phase suspension polymerization may be multistage polymerization, in which a monomer is polymerized in multiple stages, as is known. For example, the reversed-phase suspension polymerization may be two-stage polymerization. In the multistage polymerization, the first polymerization reaction is referred to as the first stage, and the monomers added in stages after the first polymerization are referred to as the monomer in the second stage, the monomer in the third stage, and so on.

The dispersion medium for use in reversed-phase suspension polymerization can be, for example, a hydrocarbon dispersion medium. Examples of hydrocarbon dispersion mediums include aliphatic hydrocarbons, such as n-hexane, n-heptane, n-octane, and ligroin; alicyclic hydrocarbons, such as cyclopentane, methyl cyclopentane, cyclohexane, and methyl cyclohexane; aromatic hydrocarbons, such as benzene, toluene, and xylene; and the like. Of these dispersion mediums, n-hexane, n-heptane, and cyclohexane are preferably used from the standpoint of ease in industrial availability, quality stability, and low price. These dispersion mediums may be used singly, or in a combination of two or more. Examples of usable dispersion mediums include Exxsol Heptane (produced by Exxon Mobil Corporation: heptane and isomeric hydrocarbons) and Nappar 6 (produced by Exxon Mobil Corporation: cyclohexane and isomeric hydrocarbons), which are known as combined solvents; and the like.

Examples of the water-soluble ethylenically unsaturated monomer usable in reversed-phase suspension polymerization are the same as those of the water-soluble ethylenically unsaturated monomer described above. From the standpoint of excellent reactivity, (meth)acrylic acid and salts thereof, (meth)acrylamide, and N,N-dimethyl acrylamide are preferable, and (meth)acrylic acid and salts thereof are more preferable. In addition, the water-soluble ethylenically unsaturated monomer may be neutralized so that the degree of neutralization falls within the range described above.

In the polymerization reaction in the polymerization step, in particular, in the reversed-phase suspension polymerization, a thickening agent can be used as needed. Examples of the thickening agent include hydroxyethyl cellulose, hydroxypropyl cellulose, methyl cellulose, carboxymethyl cellulose, polyacrylic acid, (partially) neutralized polyacrylic acid, polyethylene glycol, polyacrylamide, polyethyleneimine, dextrin, sodium alginate, polyvinyl alcohol, polyvinyl pyrrolidone, polyethylene oxide, and the like.

The dispersion stabilizer for use in the reversed-phase suspension polymerization may be a surfactant. Examples include sucrose fatty acid esters, polyglycerol fatty acid esters, sorbitan fatty acid esters, polyoxyethylene sorbitan fatty acid esters, polyoxyethylene glycerol fatty acid esters, sorbitol fatty acid esters, polyoxyethylene sorbitol fatty acid esters, polyoxyethylene alkyl ethers, polyoxyethylene alkyl phenyl ethers, polyoxyethylene castor oil, polyoxyethylene hydrogenated castor oil, alkylallyl formaldehyde condensed polyoxyethylene ethers, polyoxyethylene polyoxypropylene block copolymers, polyoxyethylene polyoxypropyl alkyl ethers, polyethylene glycol fatty acid esters, alkyl glucoside, N-alkyl gluconamide, polyoxyethylene fatty acid amide, polyoxyethylene alkylamine, phosphoric esters of polyoxyethylene alkyl ethers, phosphoric esters of polyoxyethylene alkyl allyl ethers, and the like. Among these, sorbitan fatty acid esters, polyglycerol fatty acid esters, sucrose fatty acid esters, and the like are preferable from the standpoint of monomer dispersion stability. These surfactants may be used singly, or in a combination of two or more.

In order to keep the water-soluble ethylenically unsaturated monomer well dispersed in a hydrocarbon dispersion medium and achieve a dispersion effect that is commensurate with the amount of the surfactant used, the amount of the surfactant used is preferably 0.1 to 30 parts by mass, and more preferably 0.3 to 20 parts by mass, per 100 parts by mass of the water-soluble ethylenically unsaturated monomer in the first stage.

As the dispersion stabilizer, a polymeric dispersant may also be used in combination with or in place of the surfactant. Examples of usable polymeric dispersants include maleic anhydride-modified polyethylene, maleic anhydride-modified polypropylene, maleic anhydride-modified ethylene-propylene copolymers, maleic anhydride-modified EPDM (ethylene-propylene-diene terpolymer), maleic anhydride-modified polybutadiene, maleic anhydride-ethylene copolymers, maleic anhydride-propylene copolymers, maleic anhydride-ethylene-propylene copolymers, maleic anhydride-butadiene copolymers, polyethylene, polypropylene, ethylene-propylene copolymers, oxidized polyethylene, oxidized polypropylene, oxidized ethylene-propylene copolymers, ethylene-acrylic acid copolymers, ethyl cellulose, ethyl hydroxyethyl cellulose, and the like. Among these, maleic anhydride-modified polyethylene, maleic anhydride-modified polypropylene, maleic anhydride-modified ethylene-propylene copolymers, maleic anhydride-ethylene copolymers, maleic anhydride-propylene copolymers, maleic anhydride-ethylene-propylene copolymers, polyethylene, polypropylene, ethylene-propylene copolymers, oxidized polyethylene, oxidized polypropylene, oxidized ethylene-propylene copolymers, and the like are preferable from the standpoint of monomer dispersion stability. These polymeric dispersants may be used singly, or in a combination of two or more.

In order to keep the water-soluble ethylenically unsaturated monomer well dispersed in a hydrocarbon dispersion medium and achieve a dispersion effect that is commensurate with the amount of the polymeric dispersant used, the amount of the polymeric dispersant for use is preferably 0.1 to 30 parts by mass, and more preferably 0.3 to 20 parts by mass, per 100 parts by mass of the water-soluble ethylenically unsaturated monomer in the first stage.

In the polymerization step, for example, a wide range of known polymerization initiators can be used. Examples of radical polymerization initiators include persulfates, such as potassium persulfate, ammonium persulfate, and sodium persulfate; peroxides, such as methyl ethyl ketone peroxide, methyl isobutyl ketone peroxide, di-t-butylperoxide, t-butyl cumylperoxide, and hydrogen peroxide; azo compounds, such as 2,2'-azobis(2-methylpropionamidine)dihydrochloride, 2,2'-azobis[2-(N-phenylamidino)propane]dihydrochloride, 2,2'-azobis[2-(N-allylamidino)propane]dihydrochloride, and 4,4'-azobis(4-cyanovaleric acid); and the like. The radical polymerization initiators can also be combined with one or more reducing agents, such as sodium sulfite, sodium hydrogen sulfite, ferrous sulfate, and L-ascorbic acid, to use them as redox polymerization initiators.

The lower limit of the amount of the radical polymerization initiator for use in the polymerization step is preferably 0.01 mmol, and more preferably 0.05 mmol, per mole of the water-soluble ethylenically unsaturated monomer used, from the standpoint of polymerization stability. The upper limit of the amount of the radical polymerization initiator for use is preferably 20 mmol, and more preferably 10 mmol, per mole of the water-soluble ethylenically unsaturated monomer used, from the standpoint of polymerization stability. The use of the radical polymerization initiator in an amount within this numerical range makes it easier to produce the water-absorbent resin.

A chain transfer agent may optionally be used in the polymerization step, if necessary. Examples of the chain transfer agent include hypophosphites, thiols, thiolic acids, secondary alcohols, amines, and the like.

An internal-crosslinking agent may be used as necessary in the polymerization step. This allows the polymer obtained in the polymerization step to have a structure in which the inside of the polymer is crosslinked with an internal-crosslinking agent. Thus, when the water-absorbent resin particles has a crosslinked structure inside of the polymer, this internal crosslinked structure is formed when the water-soluble ethylenically unsaturated monomer is polymerized. In the present specification, the crosslinking agent for use in crosslinking the inside of the polymer is referred to as an "internal-crosslinking agent," in order to distinguish it from the post-crosslinking agent described later.

Examples of the internal-crosslinking agent include compounds having two or more polymerizable unsaturated groups. Specific examples of the internal-crosslinking agent include di or tri(meth)acrylic acid esters of polyols, such as (poly)ethylene glycol (in the present specification, for example, "polyethylene glycol" and "ethylene glycol" together are referred to as "(poly)ethylene glycol"; the same applies below), (poly)propylene glycol, trimethylolpropane, glycerol polyoxyethylene glycol, polyoxypropylene glycol, and (poly)glycerol; unsaturated polyesters obtained by reacting the polyols listed above with unsaturated acids, such as maleic acid and fumaric acid; bisacrylamides, such as N,N'-methylenebis(meth)acrylamide; di or tri(meth)acrylic acid esters obtained by reacting polyepoxide with (meth)acrylic acid; di(meth)acrylic acid carbamyl esters obtained by reacting polyisocyanate, such as tolylene diisocyanate and hexamethylene diisocyanate, with hydroxyethyl (meth)acrylate; allylated starch; allylated cellulose; diallyl phthalate; N,N',N''-triallyl isocyanurate; divinyl benzene; and the like.

Examples of the internal-crosslinking agent further include, in addition to the compounds having two or more polymerizable unsaturated groups, glycidyl group-containing compounds, such as (poly)ethylene glycol diglycidyl ether, (poly)propylene glycol diglycidyl ether, and (poly)glycerol diglycidyl ether; (poly)ethylene glycol, (poly)propylene glycol, (poly)glycerol, pentaerythritol, ethylene diamine, polyethyleneimine, glycidyl (meth)acrylate, and the like. These internal-crosslinking agents may be used in a combination of two or more. Among these, (poly)ethylene glycol diglycidyl ether, (poly)propylene glycol diglycidyl ether, (poly)glycerol diglycidyl ether, and N,N'-methylenebisacrylamide are preferable from the standpoint of excellent reactivity at low temperatures.

When an internal-crosslinking agent is used, the lower limit of the amount of the internal-crosslinking agent for use is preferably 0.0001 mmol, more preferably 0.0005 mmol, even more preferably 0.001 mmol, and particularly preferably 0.01 mmol, per mole of the water-soluble ethylenically unsaturated monomer used, from the standpoint of ease of producing the water-absorbent resin. The upper limit of the amount of the internal-crosslinking agent for use is preferably 5 mmol, more preferably 0.5 mmol, even more preferably 0.1 mmol, and particularly preferably 0.05 mmol, per mole of the water-soluble ethylenically unsaturated monomer used. The internal-crosslinking agents may be used singly, or in a combination of two or more.

The temperature for the polymerization reaction in the polymerization step can be suitably determined in accordance with, for example, the type and amount of radical polymerization initiator used. The temperature for the polymerization reaction can be, for example, 20 to 110°C, and preferably 40 to 90°C. The reaction time can be set, for example, within the range of 0.1 hours or more to 4 hours or less.

The polymerization step can be performed, for example, by adding an aqueous solution containing an optionally neutralized water-soluble ethylenically unsaturated monomer, a thickening agent, a radical polymerization initiator, and an internal-crosslinking agent to a dispersion medium in which a polymer dispersion stabilizer has been dissolved; and then adding a surfactant to form a suspension. The order of adding each starting material is not limited to this order.

By the polymerization step, the water-soluble ethylenically unsaturated monomer is polymerized to form a polymer. For example, reversed-phase suspension polymerization provides a slurry in which the polymer formed of the water-soluble ethylenically unsaturated monomer is dispersed. When an internal-crosslinking agent is used, the polymer obtained in the polymerization step has a structure crosslinked with the internal-crosslinking agent.

In the polymerization step, when the multistage polymerization described above is performed, the first stage of reversed-phase suspension polymerization is performed by the method described above; and then the water-soluble ethylenically unsaturated monomer is added to and mixed with the reaction mixture obtained in the first stage of the polymerization step to perform the second and the subsequent stages of reversed-phase suspension polymerization in the same manner as in the first stage. In the reversed-phase suspension polymerization at the second stage or each of the subsequent stages after the second stage, the radical polymerization initiator and the optionally added internal-crosslinking agent, in addition to the water-soluble ethylenically unsaturated monomer, can be added in a molar ratio of each component to the water-soluble ethylenically unsaturated monomer within the numerical ranges described above, based on the amount of the water-soluble ethylenically unsaturated monomer added at the second stage or each of the subsequent stages after the second stage of reversed-phase suspension polymerization; and then reversed-phase suspension polymerization can be performed under the same conditions as those of the method described above.

When the reversed-phase suspension polymerization is performed in multiple stages, it is preferable to set the total amount of the polymerization initiator and the total amount of the optionally used internal-crosslinking agent, per mole of the water-soluble ethylenically unsaturated monomer used in reversed-phase suspension polymerization, so as to fall within the numerical ranges described above, from the standpoint of ease of producing the desired water-absorbent resin.

The method for producing the water-absorbent resin particles may also comprise a drying step of drying the polymer obtained by the polymerization step. The drying step is a step of removing water from the polymer obtained in the polymerization step or from the polymer crosslinked with an internal-crosslinking agent, by applying energy such as heat from outside to the polymer. For example, in the case of reversed-phase suspension polymerization, water, the hydrocarbon dispersion medium, and other components can be removed from the polymer by performing azeotropic distillation in the drying step, with the polymer (hydrogel) obtained in the polymerization step being dispersed in the hydrocarbon dispersion medium. The water content of the polymer or the polymer crosslinked with the internal-crosslinking agent can be adjusted by performing the drying step. The drying step may be performed concurrently with the post-crosslinking step described later.

The drying step may be performed under ordinary pressure or under reduced pressure, and may be performed in a gas stream such as nitrogen in order to increase drying efficiency. When the drying step is performed under ordinary pressure, the drying temperature is preferably 70 to 250°C, more preferably 80 to 180°C, even more preferably 80 to 140°C, and particularly preferably 90 to 130°C. Under reduced pressure, the drying temperature is preferably 40 to 160°C, and more preferably 50 to 120°C.

The polymer obtained in the polymerization step (including a polymer crosslinked with an internal-crosslinking agent) or the polymer obtained in the drying step (including a polymer crosslinked with an internal-crosslinking agent) may be treated with a post-crosslinking agent. This allows the polymer to have a structure in which the polymer is crosslinked with a post-crosslinking agent; thus, the water-absorbent resin has a high crosslinking density near the surface thereof. As the method for treating the polymer with a post-crosslinking agent, a wide range of known methods can be used. The step of treating the polymer with a post-crosslinking agent is referred to as the "post-crosslinking step." The treatment with a post-crosslinking agent can be performed, for example, in the dispersion medium described above.

The type of post-crosslinking agent can include, for example, a wide range of post-crosslinking agents usable in conventional water-absorbent resins. The post-crosslinking agent for use can be a compound having two or more reactive functional groups. Specific examples of the post-crosslinking agent include polyols, such as ethylene glycol, propylene glycol, 1,4-butanediol, trimethylolpropane, glycerol, polyoxyethylene glycol, polyoxypropylene glycol, and polyglycerol; polyglycidyl compounds, such as (poly)ethylene glycol diglycidyl ether, (poly)glycerol diglycidyl ether, (poly)glycerol triglycidyl ether, trimethylolpropane triglycidyl ether, (poly)propylene glycol polyglycidyl ether, and (poly)glycerol polyglycidyl ether; haloepoxy compounds, such as epichlorohydrin, epibromohydrin, and $\alpha$-methyl epichlorohydrin; isocya-nate compounds, such as 2,4-tolylene diisocyanate and hexamethylene diisocyanate; oxetane compounds, such as 3-methyl-3-oxetane methanol, 3-ethyl-3-oxetane methanol, 3-butyl-3-oxetane methanol, 3-methyl-3-oxetane ethanol, 3-ethyl-3-oxetane ethanol, and 3-butyl-3-oxetane ethanol; oxazoline compounds, such as 1,2-ethylene bis oxazoline; carbonate compounds, such as ethylene carbonate; hydroxy alkyl amide compounds, such as bis[N,N-di($\beta$-hydroxyethyl)] adipamide; and the like. Of these, polyglycidyl compounds, such as (poly)ethylene glycol diglycidyl ether, (poly)ethylene glycol triglycidyl ether, (poly)glycerol diglycidyl ether, (poly)glycerol triglycidyl ether, (poly)propylene glycol polyglycidyl ether, and (poly)glycerol polyglycidyl ether are more preferable. The post-crosslinking agents may be used singly, or in a combination of two or more.

From the standpoint of ease of adjusting the 30-second swelling height within a predetermined range, the lower limit of the amount of the post-crosslinking agent for use is preferably 0.01 mmol, more preferably 0.05 mmol, and even more preferably 0.1 mmol, per mole of the water-soluble ethylenically unsaturated monomer that constitutes the polymer to be post-crosslinked. The upper limit of the amount of the post-crosslinking agent for use is preferably 10 mmol, more preferably 5 mmol, and even more preferably 2 mmol, per mole of the water-soluble ethylenically unsaturated monomer.

The reaction temperature (i.e., the temperature at which the polymer is treated with the post-crosslinking agent) in the post-crosslinking step is preferably 50 to 250°C, more preferably 60 to 180°C, and even more preferably 60 to 140°C. The reaction time of the post-crosslinking (i.e., the time for treating the polymer with the post-crosslinking agent at the reaction temperature) cannot be determined in general because it varies depending on the reaction temperature, the type and the amount of the post-crosslinking agent used, etc. The reaction time of the post-crosslinking is typically 1 to 300 minutes, and preferably 5 to 200 minutes.

In the present invention, the method may also comprise a step of adding the phosphonic acid-based chelating agent described later before, during, or after the post-crosslinking step. This step is hereinafter referred to as the "chelating agent addition step." By the chelating agent addition step, a phosphonic acid-based chelating agent can be added during the production process for the water-absorbent resin particles; thus, the resulting water-absorbent resin particles can contain the phosphonic acid-based chelating agent. For example, the phosphonic acid-based chelating agent can be placed near the surface of the water-absorbent resin particles.

In the chelating agent addition step, for example, the polymer before post-crosslinking (i.e., before the post-crosslinking agent is added) can be mixed with the phosphonic acid-based chelating agent, the polymer after post-crosslinking (i.e., the polymer after the post-crosslinking agent is added) can be mixed with the chelating agent, or a combination of these may be used. That is, in the method for producing the water-absorbent resin particles, the polymer before post-crosslinking may be mixed with the phosphonic acid-based chelating agent and then subjected to post-crosslinking treatment; or, after the polymer is subjected to post-crosslinking treatment, the phosphonic acid-based chelating agent may be mixed with the resulting polymer. Alternatively, in the method for producing water-absorbent resin particles, a step of mixing the polymer before post-crosslinking with the phosphonic acid-based chelating agent, then subjecting the polymer to post-crosslinking treatment, and further, mixing the polymer after post-crosslinking treatment with the phosphonic acid-based chelating agent may be performed.

The amount of the phosphonic acid-based chelating agent used can be suitably adjusted so that the phosphonic acid-based chelating agent is contained in an amount of 0.01 to 40 $\mu$mol per gram of the resulting water-absorbent resin particles.

The phosphonic acid-based chelating agent does not necessarily have to be added during the production of the water-absorbent resin particles, and as described later, the phosphonic acid-based chelating agent can be mixed with the water-absorbent resin particles produced beforehand.

In the polymerization step or a step after the polymerization step in the method for producing water-absorbent resin particles, additives may be added according to the purpose in order to impart various properties to the resulting water-absorbent resin particles. Examples of additives include various additives conventionally added to water-absorbent resin particles, such as inorganic powders, surfactants, oxidants, reducing agents, radical chain inhibitors, antioxidants, antimicrobial agents, deodorants, and the like.

The water content of the water-absorbent resin particles may be, for example, 20.0 mass% or less, 15.0 mass% or less, or 10.0 mass% or less, based on the total mass of the water-absorbent resin particles. The water content based on the total mass of the water-absorbent resin particles is measured by the method described later in the section "Measurement of Water Content."

Phosphonic Acid-based Chelating Agent

The phosphonic acid-based chelating agent contained in the water-absorbent resin composition of the present invention may be, for example, any of a wide range of known phosphonic acid-based chelating agents. The phosphonic acid-based chelating agent is a compound that has at least two phosphonic acid moieties in the molecule. The phosphonic acid-based chelating agent may be in salt form, i.e., the phosphonic acid moieties may form salt.

Examples of the phosphonic acid-based chelating agent include ethylenediamine tetra methylene phosphonic acid, diethylene triamine penta methylene phosphonic acid, nitrotris methylene phosphonic acid, 1-hydroxyethylidene-1,1-diphosphonic acid, diethylenetriamine penta(methylene phosphonic acid), and salts thereof.

When the phosphonic acid-based chelating agent is in the form of a salt, examples of the salt include alkali metal salts, such as salts of sodium and potassium; alkaline earth metal salts, such as salts of magnesium and calcium; organic amine salts; ammonium salts; and the like. All or part of the ligands of the phosphonic acid-based chelating agent can form a salt. When the phosphonic acid-based chelating agent is in the form of a salt, examples include ethylenediamine tetra methylene phosphonic acid pentasodium salt and diethylene triamine penta methylene phosphonic acid heptasodium salt.

The chelating agent contained in the water-absorbent resin composition of the present invention may be one chelating agent or a combination of two or more chelating agents. In the chelating agent, the lower limit of the number of ligands is, for example, 2, 3, or 4, and the upper limit of the number of ligands is, for example, 12, 11, or 10.

Water-absorbent Resin Composition

The water-absorbent resin composition of the present invention comprises the phosphonic acid-based chelating agent in an amount of 0.01 to 40 $\mu$mol (0.01 $\mu$mol or more and 40 $\mu$mol or less) per gram of the water-absorbent resin particles, as described above. If the content of the phosphonic acid-based chelating agent is less than 0.01 $\mu$mol or more than 40 $\mu$mol per gram of the water-absorbent resin particles, the heat resistance of the water-absorbent resin composition decreases, making it difficult to use the composition as a water-blocking material. That is, in the present invention, the heat resistance of the water-absorbent resin composition is improved only when the content of the phosphonic acid-based chelating agent is within the specific range.

The water-absorbent resin particles, which are the basis for the content of the phosphonic acid-based chelating agent, can comprise a polymer of a water-soluble ethylenically unsaturated monomer, an initiator, a crosslinking agent, and water contained in the water-absorbent resin particles. The water-absorbent resin particles may further comprise a thickening agent, a surfactant, and a polymeric dispersant used in the polymerization step. The water-absorbent resin particles may also further comprise various additives added in the polymerization step or a step after the polymerization step. Examples of additives include inorganic powders, surfactants, oxidants, reducing agents, radical chain inhibitors, antioxidants, antimicrobial agents, deodorants, and the like.

The content of the phosphonic acid-based chelating agent is preferably 0.1 $\mu$mol or more, more preferably 0.5 $\mu$mol or more, and even more preferably 1.5 $\mu$mol or more, per gram of the water-absorbent resin particles. The content of the phosphonic acid-based chelating agent is also preferably 30 $\mu$mol or less, more preferably 25 $\mu$mol or less, even more preferably 18 $\mu$mol or less, still even more preferably 13 $\mu$mol or less, and particularly preferably 10 $\mu$mol or less, per gram of the water-absorbent resin particles.

From the standpoint of improving the heat resistance of the water-absorbent resin composition, the phosphonic acid content in the phosphonic acid-based chelating agent is preferably 0.4 $\mu$mol or more, more preferably 2.0 $\mu$mol or more, and even more preferably 6.0 $\mu$mol or more, per gram of the water-absorbent resin particles. The phosphonic acid content in the phosphonic acid-based chelating agent is also preferably 150 $\mu$mol or less, more preferably 100 $\mu$mol or less, even more preferably 80 $\mu$mol or less, still even more preferably 65 $\mu$mol or less, and particularly preferably 50 $\mu$mol or less, per gram of the water-absorbent resin particles.

The water-absorbent resin composition of the present invention can be prepared, for example, by mixing the water-absorbent resin particles and the phosphonic acid-based chelating agent at a predetermined ratio. In this case, the phosphonic acid-based chelating agent can be mixed in a solid state such as a powder with the water-absorbent resin particles (so-called dry blend method), or can be mixed in the form of a solution in which the phosphonic acid-based chelating agent is dissolved in a solvent such as water with the water-absorbent resin particles.

Another method for producing the water-absorbent resin composition of the present invention is, for example a method using the water-absorbent resin particles obtained through the chelating agent addition step described above. That is, the water-absorbent resin particles obtained through the chelating agent addition step comprise the water-absorbent resin particles and the phosphonic acid-based chelating agent; thus, the water-absorbent resin composition of the present invention can be prepared by using the water-absorbent resin particles obtained through the chelating agent addition step. For example, the water-absorbent resin particles obtained through the chelating agent addition step can themselves be used as the water-absorbent resin composition of the present invention.

The water-absorbent resin composition of the present invention may contain other components in addition to the water-absorbent resin particles and the phosphonic acid-based chelating agent. Examples of other components include silica. When the water-absorbent resin composition of the present invention contains silica, the content of the silica is, for example, 0.01 to 5 parts by mass, preferably 0.02 to 3 parts by mass, and more preferably 0.05 to 1 part by mass, per 100 parts by mass of the water-absorbent resin particles. The water-absorbent resin composition of the present invention may contain components other than silica, and examples include various components contained in known water-blocking materials.

The water-absorbent resin composition of the present invention preferably contains the water-absorbent resin particles and the phosphonic acid-based chelating agent in an amount of 50 mass% or more, more preferably 80 mass% or more, even more preferably 90 mass% or more, and particularly preferably 95 mass% or more. The water-absorbent resin composition of the present invention may consist of the water-absorbent resin particles and the phosphonic acid-based chelating agent, or may consist of the water-absorbent resin particles, the phosphonic acid-based chelating agent, and silica.

The water-absorbent resin composition of the present invention has a median particle size of, for example, 10 to 500 $\mu$m. From the standpoint that the 30-second swelling height described later can easily be in the desired range, the water-absorbent resin composition of the present invention has a median particle size of, preferably 30 to 300 $\mu$m, more preferably 50 to 250 $\mu$m, and even more preferably 100 to 200 $\mu$m. The shape of the water-absorbent resin of the present invention may be any of a variety of shapes, such as spheres, powder, granules, ellipses, flakes, rods, and chunks.

The water-absorbent resin composition of the present invention preferably has a 30-second swelling height of 6.0 mm or more, as described above. This allows the water-absorbent resin composition of the present invention to impart excellent swelling ability to a water-blocking material and to possess improved water-blocking ability. When the surface of the water-absorbent resin particles contained in the water-absorbent resin composition of the present invention has a crosslinked structure, the 30-second swelling height tends to be 6.0 mm or more. The 30-second swelling height of the water-absorbent resin composition of the present invention can be measured according to the measurement method described in the section "Measurement of 30-second Swelling Height."

The water-absorbent resin composition of the present invention has a 30-second swelling height of more preferably 8.0 mm or more, even more preferably 10.0 mm or more, and particularly preferably 12.0 mm or more. The upper limit of the 30-second swelling height may be 26.0 mm or 18.0 mm. The 30-second swelling height of the water-absorbent resin composition can be adjusted by suitably selecting the type of water-absorbent resin particles, the median particle size, and the type of chelating agent.

In the water-absorbent resin composition of the present invention, the gel viscosity retention S after a gel of the water-absorbent resin composition is allowed to stand at 90°C for 4 days is preferably 20% or more. In this case, the water-absorbent resin composition has more excellent heat resistance. In the water-absorbent resin composition of the present invention, the gel viscosity retention S after a gel of the water-absorbent resin composition is allowed to stand at 90°C for 4 days is more preferably 40% or more, and even more preferably 60% or more. The gel viscosity retention S of the water-absorbent resin composition of the present invention after a gel of the water-absorbent resin composition is allowed to stand at 90°C for 4 days can be calculated according to the measurement method described in the section "Measurement of Gel Viscosity Retention."

In the water-absorbent resin composition of the present invention, the gel viscosity after a gel of the water-absorbent resin composition is allowed to stand at 90°C for 4 days is preferably 5000 mPa·s or more. In this case, the water-absorbent resin composition has more excellent heat resistance. In the water-absorbent resin composition of the present invention, the gel viscosity after a gel of the water-absorbent resin composition is allowed to stand at 90°C for 4 days is more preferably 10000 mPa·s or more, even more preferably 15000 mPa·s or more, and particularly preferably 20000 mPa·s or more. The gel viscosity after a gel of the water-absorbent resin composition is allowed to stand at 90°C for 4 days may also be 80000 mPa·s or less or 60000 mPa·s or less.

The water-absorbent resin composition of the present invention has excellent heat resistance and is thus suitable for a wide variety of applications, such as industrial materials such as water-blocking materials and agents for preventing dew condensation; agricultural and horticultural materials such as water-retaining agents and soil conditioners; and hygienic materials such as disposable diapers and sanitary napkins. In particular, the water-absorbent resin of the present invention, which can maintain its water-blocking effect for a long period of time, is suitable for use in water-blocking materials.

Evaluation of Water-absorbent Resin Particles

Unless otherwise specified, measurement is performed at a temperature of $25\pm2$°C and a humidity of $50\pm10$%.

Measurement of Water Content

2.0 g of water-absorbent resin particles are placed in an aluminum foil case previously adjusted to a constant weight (W1 (g)), the mouth of the aluminum foil case is lightly closed, and the total mass W2 (g) of the aluminum foil case containing the sample is accurately weighed. The aluminum foil case containing the sample is dried in a hot-air dryer with an internal temperature set at 200°C, for 2 hours. After drying, the aluminum foil case containing the sample is allowed to cool to room temperature in a desiccator. The total mass W3 (g) of the aluminum foil case containing the sample after cooling is measured. The water content of the sample is calculated using the following formula.

$$\text{Water content (mass\%)} = \{(W2-W3)/(W2-W1)\} \times 100$$

Evaluation of Water-absorbent Resin Composition

Unless otherwise specified, measurement is performed at a temperature of $25\pm2$°C and a humidity of $50\pm10$%.

Measurement of Median Particle Size (Particle Size Distribution)

5 g of a water-absorbent resin composition is sieved using a sonic vibration sieving measurement apparatus (Robot Shifter), JIS standard sieves with mesh sizes of 850 $\mu$m, 500 $\mu$m, 250 $\mu$m, 180 $\mu$m, 150 $\mu$m, 106 $\mu$m, and 75 $\mu$m, and a receiving tray. The mass of the particles remaining on each sieve is calculated as a mass percentage relative to the total amount. The mass percentages of the particles remaining on the sieves are integrated in descending order of the particle diameters, and the relationship between the mesh size of the sieve and the integrated value of the mass percentages of the particles remaining on the sieve is plotted on logarithmic probability paper. The plotted points on the probability paper are connected by straight lines; thus, the particle diameter corresponding to 50 mass% of the integrated mass percentage is determined and used as the median particle size of the water-absorbent resin composition.

Measurement of 30-second Swelling Height

The swelling height of a water-absorbent resin composition is measured with the swelling height measurement apparatus X shown in Fig. 1. The swelling height measurement apparatus X shown in Fig. 1 includes a movement distance measurement apparatus 1, a concave circular cup 2 (height: 45 mm, outer diameter: 90 mm, depth of the concave portion: 40 mm, inner diameter of the concave portion: 80 mm), a plastic convex circular cylinder 3 (outside diameter: 79 mm; 60 through-holes 7 with a diameter of 2 mm are uniformly formed on the surface in contact with the water-absorbent resin composition), and a nonwoven fabric 4 (liquid-permeable nonwoven fabric with a basis weight of 11 g/m$^2$). The swelling height measurement apparatus X can measure a change in movement distance of the convex circular cylinder 3 in 0.01 mm increments using a laser beam 6. The concave circular cup 2 can uniformly disperse a predetermined amount of water-absorbent resin composition. The convex circular cylinder 3 can uniformly apply a load of 90 g to a water-absorbent resin composition 5, which is a sample.

First, 0.2 g of a sample (water-absorbent resin composition 5) is uniformly sprayed over the concave circular cup 2, and the nonwoven fabric 4 is spread thereon. The convex circular cylinder 3 is gently placed on the nonwoven fabric 4 and arranged so that the laser beam 6 of the sensor of the movement distance measurement apparatus 1 can illuminate the center portion of the cylinder 3. Ion-exchanged water previously adjusted to 20°C is poured into the concave circular cup 2 through the through-holes 7 of the convex circular cylinder 3 to cause the water-absorbent resin composition 5 to swell. The time when the laser detects that the convex circular cylinder 3 is pushed up due to swelling of the water-absorbent resin composition 5 is defined as the start of water absorption (0 seconds) (automatic measurement starts when the convex circular cylinder 3 is displaced by 0.5 mm), and the movement degree of the convex circular cylinder 3 pushed up due to swelling of the water-absorbent resin composition 5 (the amount of change in the position of the convex circular cylinder 3 in the direction perpendicular to the bottom surface of the concave portion of the concave circular cup 2) is measured. The level of ion-exchanged water is checked every 3 seconds from the start of pouring ion-exchanged water, and ion-exchanged water is continued to be intermittently poured so as to maintain the water surface near the height of the flat surface of the flat portion of the convex circular cylinder 3. The movement degree of the convex circular cylinder 3 thirty seconds after the moment of the start of water absorption by the water-absorbent resin composition 5 (more precisely, the moment when the cylinder 3 is pushed up by 0.5 mm upon absorption of a trace of ion-exchanged water by the water-absorbent resin composition) (including the height to which the cylinder 3 is pushed up (0.5 mm) at the moment of the start of water absorption) is recorded as the "30-second swelling height."

Measurement of Gel Viscosity Retention; Evaluation of Heat Resistance

The gel viscosity of the water-absorbent resin composition is determined by adjusting the temperature of the swollen gel to 25±0.5°C, and making measurement using a Brookfield rotational viscometer (A type, spindle rotor No. 5, rotation speed: 10 rpm). In this gel viscosity measurement, the gel is placed to a height of 65 mm in a 200 mL glass beaker with an inner diameter of 64 mm $\varphi$.

100 g of ion-exchanged water is added to a 200 mL beaker and stirred at 600 rpm using a magnetic stirrer bar (cylindrical, diameter 8 mm $\times$ length 30 mm, without a ring). 2.0 g of the water-absorbent resin composition is placed into the vortex created by this stirring, and the mixture is stirred until the magnetic stirrer stops due to the gel formed. This operation is performed twice in total to obtain a swollen gel corresponding to 4.0 g of the water-absorbent resin composition before swelling. 200 g of the thus-obtained swollen gel is placed into a 250 mL glass heat-resistant bottle and allowed to stand in a hot-air dryer at 90±2°C. The viscosity of the swollen gel after a lapse of 2 days and 4 days is measured, and the gel viscosity retention S is calculated according to the following formula (I) and used as an index of heat resistance.

$$\texttt{Gel Viscosity Retention S = B/A \quad (I)}$$

(wherein A represents the gel viscosity after 2 days (mPa·s), and B represents the gel viscosity after 4 days (mPa·s)).

2. Water-blocking Material and Cable

As long as the water-blocking material of the present invention comprises the water-absorbent resin composition of the present invention described above, the composition of the water-blocking material can have, for example, the same composition as that of a known water-blocking material. The water-blocking material can be formed of the water-absorbent resin composition alone. Alternatively, a mixture of the water-absorbent resin composition and rubber and/or thermoplastic resin, etc., can be formed into a water-blocking material. Examples of the water-blocking material include water-blocking tapes, water-blocking yarns, and the like.

The water-blocking tape can be obtained, for example, by retaining the water-absorbent resin composition in a liquid-permeable sheet. Alternatively, the water-blocking tape can be obtained by sandwiching the water-absorbent resin composition between two or more liquid-permeable sheets. Specifically, a water-blocking tape can be obtained by adhering the water-absorbent resin composition and a liquid-impermeable sheet together using an adhesive to form a sheet. Examples of usable liquid-permeable sheets include nonwoven fabrics, woven fabrics, films, and the like made of a synthetic resin such as polyolefin, polyester, polyamide, nylon, or acrylic.

The water-blocking yarn can be obtained, for example, by applying the water-absorbent resin composition of the present invention to a substrate or impregnating a substrate with the water-absorbent resin composition of the present invention. Examples of usable substrates include long synthetic fibers and plastic yarns (substrate yarns). Specific examples include long fibers and plastic yarns of synthetic resins such as polyolefin, polyester, polyamide, nylon, and acrylic.

In the production of the water-blocking yarn, the method for applying the water-absorbent resin composition to a substrate or impregnating a substrate with the water-absorbent resin composition is not particularly limited. For example, the water-absorbent resin composition can be adhered to a substrate by applying a dispersion in which the water-absorbent resin composition is dispersed in an organic solvent to the substrate or impregnating the substrate with the dispersion. When the adhesion of the water-absorbent resin composition to the substrate is weak, the adhesion can be improved by using an adhesive.

Examples of adhesives include rubber-based adhesives such as natural rubber, butyl rubber, and polyisoprene; styrene-based elastomer adhesives such as a styrene-isoprene block copolymer (SIS) and a styrene-butadiene block copolymer (SBS); ethylene-vinyl acetate copolymer (EVA) adhesives; ethylene-acrylic acid derivative copolymer-based adhesives such as an ethylene-ethyl acrylate copolymer (EEA); ethylene-acrylic acid copolymer (EAA) adhesives; polyamide-based adhesives such as copolymerized nylon; polyolefin-based adhesives such as polyethylene and polypropylene; polyester-based adhesives such as polyethylene terephthalate (PET) and copolymerized polyester; and acrylic adhesives.

The water-blocking material of the present invention comprises the water-absorbent resin composition of the present invention and thus has excellent heat resistance. In particular, even if the water-blocking material absorbs water to form a gel and is then placed in a high-temperature environment, the gel is less likely to deteriorate, and the water-blocking ability is less likely to decrease.

The water-blocking material of the present invention can be used for various applications. For example, the water-blocking material can be used for various cables, for example, communication cables and power cables, such as optical cables. In particular, the water-blocking material can be suitably used for power cables used underground and undersea. The water-blocking tape, water-blocking yarn, etc. described above are particularly suitable as water-blocking materials for power cables.

As long as the power cable comprises the water-blocking material described above, the composition of the power cable is not particularly limited. For example, the power cable can have the same composition as that of a known power cable. Like a common power cable, the power cable may have a structure in which an inner semiconducting layer, an insulating layer, an outer semiconducting layer, and a coating layer are sequentially provided around a central conductor. In order to prevent water that has entered from the outside from running along the length of the cable, a water-blocking tape is disposed between the outer semiconducting layer and the coating layer. Further, a water-blocking tape may be disposed between the inner semiconducting layer and the insulating layer. Moreover, a water-blocking yarn may be included in the central conductor.

The features (properties, structures, functions, etc.) described in the embodiments of the present disclosure may be combined in any manner to specify the subject matter included in the present disclosure. That is, this disclosure includes all of the subject matter comprising any combination of the combinable features described herein.

Examples

The following describes the present invention in more detail with reference to Examples. However, the present invention is not limited to the embodiments of these Examples. The water-absorbent resin particles obtained in the following Production Examples and the water-absorbent resin compositions obtained in the Examples and Comparative Examples were evaluated by the various test methods described later. Unless otherwise specified, measurement was performed at a temperature of $25\pm2$°C and a humidity of $50\pm10$%.

Production of Water-absorbent Resin Particles

Production Example 1

A 2 L round-bottom cylindrical separable flask with an inner diameter of 11 cm equipped with a reflux condenser, a dropping funnel, a nitrogen gas inlet tube, and stirring blades including two sets of four inclined paddle blades with a blade diameter of 5 cm as a stirrer was prepared. Into this flask, 292 g of n-heptane as a hydrocarbon dispersion medium was placed, and 0.782 g of a maleic anhydride-modified ethylene-propylene copolymer (Mitsui Chemicals, Inc., Hi-Wax 1105A) as a polymeric dispersant was added. The mixture was heated to 80°C with stirring to dissolve the dispersant and then cooled to 56°C. Meanwhile, 92.0 g (1.03 mol) of an 80.5 mass% aqueous acrylic acid solution as a water-soluble ethylenically unsaturated monomer was placed in a beaker with an inner volume of 300 mL, and while cooling with ice water, 102.8 g of a 30 mass% aqueous sodium hydroxide solution was added dropwise to prepare a 75 mol% neutralized product of acrylic acid. Further, 44.7 g of water, 0.0644 g (0.238 mmol) of potassium persulfate as a water-soluble radical polymerization agent, and 0.0102 g (0.059 mmol) of ethylene glycol diglycidyl ether as an internal-crosslinking agent were added and dissolved to prepare an aqueous solution in the first-stage. The aqueous solution was added to the separable flask, followed by stirring for 10 minutes. Thereafter, a surfactant solution obtained by dissolving 0.782 g of sucrose stearate (HLB 3, Mitsubishi-Kagaku Foods Corporation, RYOTO Sugar Ester S-370) as a surfactant in 7.04 g of n-heptane by heating in a 20 mL vial was further added. After the inside of the system was sufficiently purged with nitrogen with stirring at a stirrer rotation speed of 450 rpm, the flask was immersed in a water bath at 70°C to raise the temperature, and polymerization was allowed to proceed for 60 minutes, thereby obtaining a polymerization slurry liquid in the first stage.

Meanwhile, 101.2 g (1.13 mol) of an 80.5 mass% aqueous acrylic acid solution as a water-soluble ethylenically unsaturated monomer was placed in a separate beaker with an inner volume of 500 mL, and while cooling with ice water, 113.1 g of a 30 mass% aqueous sodium hydroxide solution was added dropwise to prepare a 75 mol% neutralized product of acrylic acid. Further, 13.2 g of water, 0.081 g (0.300 mmol) of potassium persulfate as a water-soluble radical polymerization agent, and 0.0092 g (0.053 mmol) of ethylene glycol diglycidyl ether as an internal-crosslinking agent were added and dissolved to prepare an aqueous solution in the second stage.

The inside of the system in the separable flask was cooled to 31°C while stirring at a stirrer rotation speed of 1000 rpm. Next, the aqueous solution in the second stage was added in its entirety to the polymerization slurry liquid in the first stage, and the inside of the system was purged with nitrogen for 30 minutes. The flask was then again immersed in a water bath at 70°C to raise the temperature, and a polymerization reaction was allowed to proceed for 60 minutes, thereby obtaining a slurry containing a hydrogel polymer 1. Thereafter, the flask containing the slurry containing the hydrogel polymer 1 was immersed in an oil bath at 125°C, and 243.2 g of water was removed from the system while refluxing n-heptane by azeotropic distillation of n-heptane and water. 7.15 g (0.821 mmol) of a 2 mass% aqueous ethylene glycol diglycidyl ether solution was then added as a post-crosslinking agent to the flask, and the flask was maintained at 83°C for 2 hours. Subsequently, n-heptane was evaporated by heating in an oil bath at 125°C to dry the product, and further, the product was passed through a sieve with a mesh size of 850 $\mu$m to obtain 196.5 g of water-absorbent resin particles (1). The water-absorbent resin particles (1) had a water content of 4.6 mass%.

Production Example 2

A 2 L round-bottom cylindrical separable flask with an inner diameter of 11 cm equipped with a reflux condenser, a dropping funnel, a nitrogen gas inlet tube, and stirring blades (surface-coated with a fluorine resin) including two sets of four inclined paddle blades with a blade diameter of 5 cm as a stirrer was prepared. 471 g of n-heptane as a hydrocarbon dispersion medium and 1.10 g of sorbitan monolaurate (HLB 8.6, produced by NOF Corporation, product name: Nonion LP-20R) as a surfactant were added to the flask. The temperature of the resulting mixture was raised to 46°C. Meanwhile, 92.0 g (1.03 mol) of an 80.5 mass% aqueous acrylic acid solution was placed as a water-soluble ethylenically unsaturated monomer in a beaker with an inner volume of 300 mL, and while cooling with ice water, 102.8 g of a 30 mass% aqueous sodium hydroxide solution was added dropwise to prepare a 75 mol% neutralized product of acrylic acid. Further, 44.6 g of water and 0.1012 g (0.374 mmol) of potassium persulfate as a water-soluble radical polymerization agent were added and dissolved to prepare an aqueous solution. The aqueous solution was added to the separable flask, and the flask was purged with nitrogen for 30 minutes with stirring at a stirrer rotation speed of 700 rpm. Thereafter, the flask was immersed in a water bath at 70°C to raise the temperature, and polymerization was allowed to proceed for 60 minutes, thereby obtaining a slurry containing a hydrogel polymer 2.

After polymerization, 0.41 g (0.047 mmol) of a 2 mass% aqueous ethylene glycol diglycidyl ether solution was added to the flask containing the slurry containing the hydrogel polymer 2. Subsequently, the flask was immersed in an oil bath at 125°C, and 103.3 g of water was removed from the system while refluxing n-heptane by azeotropic distillation of n-heptane and water. 2.76 g (0.317 mmol) of a 2 mass% aqueous ethylene glycol diglycidyl ether solution as a post-crosslinking agent was then added to the flask, and the flask was maintained at 83°C for 2 hours. Thereafter, n-heptane was evaporated by heating in an oil bath at 125°C to dry the product, and further, the product was passed through a sieve with a mesh size of 850 $\mu$m to obtain 68.0 g of water-absorbent resin particles (2). The water-absorbent resin particles (2) had a water content of 3.5 mass%.

Production of Water-absorbent Resin Compositions

Example 1

100 parts by mass of the water-absorbent resin particles (1) obtained in Production Example 1 were mixed with 0.1 parts by mass of amorphous silica (Oriental Silicas Corporation, Tokusil NP-S). To the resulting mixture, 0.001 parts by mass of ethylenediamine tetra methylene phosphonic acid (hereinafter referred to as "EDTMP·8H") (0.023 $\mu$mol of EDTMP·8H per gram of the water-absorbent resin particles) was added in a powder form as a phosphonic acid-based chelating agent, and the mixture was mixed well to obtain a water-absorbent resin composition (1). The water-absorbent resin composition (1) had a median particle size of 179 $\mu$m and a 30-second swelling height of 8.3 mm.

Example 2

A water-absorbent resin composition (2) was obtained in the same manner as in Example 1, except that the amount of EDTMP·8H used was 0.01 parts by mass (0.23 $\mu$mol of EDTMP·8H per gram of the water-absorbent resin particles). The water-absorbent resin composition (2) had a median particle size of 179 $\mu$m and a 30-second swelling height of 8.8 mm.

Example 3

A water-absorbent resin composition (3) was obtained in the same manner as in Example 1, except that the amount of EDTMP·8H used was 0.1 parts by mass (2.3 μmol of EDTMP·8H per gram of the water-absorbent resin particles). The water-absorbent resin composition (3) had a median particle size of 179 μm and a 30-second swelling height of 7.9 mm.

Example 4

A water-absorbent resin composition (4) was obtained in the same manner as in Example 1, except that the amount of EDTMP·8H used was 0.2 parts by mass (4.6 μmol of EDTMP·8H per gram of the water-absorbent resin particles). The water-absorbent resin composition (4) had a median particle size of 179 μm and a 30-second swelling height of 8.5 mm.

Example 5

A slurry containing the hydrogel polymer 1 was prepared in the same manner as in Production Example 1. A flask containing the slurry containing the hydrogel polymer 1 was immersed in an oil bath at 125°C. 243.7 g of water was removed from the system while refluxing n-heptane by azeotropic distillation of n-heptane and water, and 0.72 g of a 32 mass% ethylenediamine tetra methylene phosphonic acid pentasodium salt (hereinafter referred to as "EDTMP·5Na") aqueous solution (2.1 μmol of EDTMP·5Na per gram of the water-absorbent resin particles) was added as a phosphonic acid-based chelating agent. Thereafter, 7.15 g (0.821 mmol) of a 2 mass% aqueous ethylene glycol diglycidyl ether solution as a post-crosslinking agent was added to the flask, and the flask was maintained at 83°C for 2 hours. Subsequently, n-heptane was evaporated by heating in an oil bath at 125°C for drying to obtain 198.4 g of water-absorbent resin particles. Further, the water-absorbent resin particles were passed through a sieve with a mesh size of 850 μm to obtain 195.3 g of water-absorbent resin particles (3). The water-absorbent resin particles (3) had a water content of 3.6 mass%. 100 parts by mass of the water-absorbent resin particles were mixed with 0.1 parts by mass of amorphous silica (Oriental Silicas Corporation, Tokusil NP-S) to obtain a water-absorbent resin composition (5). The water-absorbent resin composition (5) had a median particle size of 166 μm and a 30-second swelling height of 8.3 mm.

Example 6

A slurry containing the hydrogel polymer 1 was prepared in the same manner as in Production Example 1. A flask containing the slurry containing the hydrogel polymer 1 was immersed in an oil bath at 125°C. 243.9 g of water was removed from the system while refluxing n-heptane by azeotropic distillation of n-heptane and water, and 0.99 g of a 31 mass% diethylene triamine penta methylene phosphonic acid heptasodium salt (hereinafter referred to as "DTPMP·7Na") aqueous solution (2.1 μmol of DTPMP·7Na per gram of the water-absorbent resin particles) was added as a phosphonic acid-based chelating agent. Thereafter, 7.15 g (0.821 mmol) of a 2 mass% aqueous ethylene glycol diglycidyl ether solution as a post-crosslinking agent was added to the flask, and the flask was maintained at 83°C for 2 hours. Subsequently, n-heptane was evaporated by heating in an oil bath at 125°C for drying to obtain 197.8 g of water-absorbent resin particles. Further, the water-absorbent resin particles were passed through a sieve with a mesh size of 850 μm to obtain 196.4 g of water-absorbent resin particles (4). The water-absorbent resin particles (4) had a water content of 3.3 mass%. 100 parts by mass of the water-absorbent resin particles were mixed with 0.1 parts by mass of amorphous silica (Oriental Silicas Corporation, Tokusil NP-S) to obtain a water-absorbent resin composition (6). The water-absorbent resin composition (6) had a median particle size of 167 μm and a 30-second swelling height of 8.1 mm.

Example 7

To 100 parts by mass of the water-absorbent resin particles (2) obtained in Production Example 2, 0.1 parts by mass of EDTMP·8H (2.3 μmol of EDTMP·8H per gram of the water-absorbent resin particles) was added in a powder form as a phosphonic acid-based chelating agent, and the mixture was mixed well to obtain a water-absorbent resin composition (7). The water-absorbent resin composition (7) had a median particle size of 166 μm and a 30-second swelling height of 15.3 mm.

Example 8

A slurry containing the hydrogel polymer 2 was prepared in the same manner as in Production Example 2. A flask containing the slurry containing the hydrogel polymer 2 was immersed in an oil bath at 125°C. 103.5 g of water was removed from the system while refluxing n-heptane by azeotropic distillation of n-heptane and water, and 0.32 g of a 32 mass% aqueous EDTMP·5Na solution (2.0 μmol of EDTMP·5Na per gram of the water-absorbent resin particles) was added as a phosphonic acid-based chelating agent. Thereafter, 2.76 g (0.317 mmol) of a 2 mass% aqueous ethylene glycol diglycidyl ether solution as a post-crosslinking agent was added to the flask, and the flask was maintained at 83°C for 2 hours. Subsequently, n-heptane was evaporated by heating in an oil bath at 125°C for drying to obtain 95.3 g of water-absorbent resin particles. Further, the water-absorbent resin particles were passed through a sieve with a mesh size of 850 μm to obtain 69.3 g of a water-absorbent resin composition (8). The water-absorbent resin composition (8) had a water content of 3.2 mass%, a median particle size of 226 μm, and a 30-second swelling height of 15.2 mm.

Example 9

A slurry containing the hydrogel polymer 2 was prepared in the same manner as in Production Example 2. A flask containing the slurry containing the hydrogel polymer 2 was immersed in an oil bath at 125°C. 103.6 g of water was removed from the system while refluxing n-heptane by azeotropic distillation of n-heptane and water, and 0.49 g of a 31 mass% aqueous DTPMP·7Na solution (2.2 μmol of DTPMP·7Na per gram of the water-absorbent resin particles) was added. Thereafter, 2.76 g (0.317 mmol) of a 2 mass% aqueous ethylene glycol diglycidyl ether solution as a post-crosslinking agent was added to the flask, and the flask was maintained at 83°C for 2 hours. Subsequently, n-heptane was evaporated by heating in an oil bath at 125°C for drying to obtain 95.4 g of water-absorbent resin particles. Further, the water-absorbent resin particles were passed through a sieve with a mesh size of 850 μm to obtain 71.3 g of a water-absorbent resin composition (9). The water-absorbent resin composition (9) had a water content of 3.3 mass%, a median particle size of 211 μm, and a 30-second swelling height of 13.0 mm.

Example 10

A water-absorbent resin composition (10) was obtained in the same manner as in Example 1, except that the amount of EDTMP·8H used was 0.9 parts by mass (21 μmol of EDTMP·8H per gram of the water-absorbent resin particles). The water-absorbent resin composition (10) had a median particle size of 179 μm and a 30-second swelling height of 8.6 mm.

Example 11

A slurry containing the hydrogel polymer 1 was prepared in the same manner as in Production Example 1. A flask containing the slurry containing the hydrogel polymer 1 was immersed in an oil bath at 125°C. 245.0 g of water was removed from the system while refluxing n-heptane by azeotropic distillation of n-heptane and water, and 2.57 g of a 32 mass% ethylenediamine tetra methylene phosphonic acid pentasodium salt (referred to as "EDTMP·5Na") aqueous solution (7.5 μmol of EDTMP·5Na per gram of the water-absorbent resin particles) was added as a phosphonic acid-based chelating agent. Thereafter, 7.15 g (0.821 mmol) of a 2 mass% aqueous ethylene glycol diglycidyl ether solution as a post-crosslinking agent was added to the flask, and the flask was maintained at 83°C for 2 hours. Subsequently, n-heptane was evaporated by heating in an oil bath at 125°C for drying to obtain 200.7 g of water-absorbent resin particles. Further, the water-absorbent resin particles were passed through a sieve with a mesh size of 850 μm to obtain 197.3 g of water-absorbent resin particles (5). The water-absorbent resin particles (5) had a water content of 4.7 mass%. 100 parts by mass of the water-absorbent resin particles were mixed with 0.1 parts by mass of amorphous silica (Oriental Silicas Corporation, Tokusil NP-S) to obtain a water-absorbent resin composition (11). The water-absorbent resin composition (11) had a median particle size of 176 μm and a 30-second swelling height of 6.8 mm.

Example 12

A slurry containing the hydrogel polymer 1 was prepared in the same manner as in Production Example 1. A flask containing the slurry containing the hydrogel polymer 1 was immersed in an oil bath at 125°C. 246.8 g of water was removed from the system while refluxing n-heptane by azeotropic distillation of n-heptane and water, and 5.13 g of a 32 mass% ethylenediamine tetra methylene phosphonic acid pentasodium salt (referred to as "EDTMP·5Na") aqueous solution (15 μmol of EDTMP·5Na per gram of the water-absorbent resin particles) was added as a phosphonic acid-based chelating agent. Thereafter, 7.15 g (0.821 mmol) of a 2 mass% aqueous ethylene glycol diglycidyl ether solution as a post-crosslinking agent was added to the flask, and the flask was maintained at 83°C for 2 hours. Subsequently, n-heptane was evaporated by heating in an oil bath at 125°C for drying to obtain 200.3 g of water-absorbent resin particles. Further, the water-absorbent resin particles were passed through a sieve with a mesh size of 850 μm to obtain 194.6 g of water-absorbent resin particles (6). The water-absorbent resin particles (6) had a water content of 4.5 mass%. 100 parts by mass of the water-absorbent resin particles passed through the sieve with a mesh size of 850 μm were mixed with 0.1 parts by mass of amorphous silica (Oriental Silicas Corporation, Tokusil NP-S) to obtain a water-absorbent resin composition (12). The water-absorbent resin composition (12) had a median particle size of 185 μm and a 30-second swelling height of 6.4 mm.

Comparative Example 1

A water-absorbent resin composition (13) was obtained in the same manner as in Example 1, except that the amount of EDTMP·8H used was 0.0001 parts by mass (0.0023 μmol of EDTMP·8H per gram of the water-absorbent resin particles). The water-absorbent resin composition (13) had a median particle size of 179 μm and a 30-second swelling height of 8.8 mm.

Comparative Example 2

A water-absorbent resin composition (14) was obtained in the same manner as in Example 1, except that the amount of EDTMP·8H used was 4.4 parts by mass (101 μmol of EDTMP·8H per gram of the water-absorbent resin particles). The water-absorbent resin composition (14) had a median particle size of 178 μm and a 30-second swelling height of 7.0 mm.

Evaluation of Water-absorbent Resin Particles

Measurement of Water Content

2.0 g of water-absorbent resin particles were placed in an aluminum foil case (No. 8) previously adjusted to a constant weight (W1 (g)), the mouth of the aluminum foil case was lightly closed, and the total mass W2 (g) of the aluminum foil case containing the sample was accurately weighed. The aluminum foil case containing the sample was dried in a hot-air dryer (produced by ADVANTEC, model: FV-320) with an internal temperature set at 200°C, for 2 hours. After drying, the aluminum foil case containing the sample was allowed to cool to room temperature in a desiccator. The total mass W3 (g) of the aluminum foil case containing the sample after cooling was measured. The water content of the sample was calculated using the following formula.

$$\texttt{Water content (mass\%) = \{(W2-W3)/(W2-W1)\} \times 100}$$

Evaluation of Water-absorbent Resin Compositions Measurement of Median Particle Size (Particle Size Distribution)

5 g of the water-absorbent resin composition obtained in each of the Production Examples was sieved using a sonic vibration sieving measurement apparatus (Robot Shifter RPS-01, produced by Seishin Enterprise Co., Ltd.), JIS standard sieves with mesh sizes of 850 μm, 500 μm, 250 μm, 180 μm, 150 μm, 106 μm, and 75 μm, and a receiving tray. The mass of the particles remaining on each sieve was calculated as a mass percentage relative to the total amount. The mass percentages of the particles remaining on the sieves were integrated in descending order of the particle diameters, and the relationship between the mesh size of the sieve and the integrated value of the mass percentages of the particles remaining on the sieve was plotted on logarithmic probability paper. The plotted points on the probability paper were connected by straight lines; thus, the particle diameter corresponding to 50 mass% of the integrated mass percentage was determined and used as the median particle size of the water-absorbent resin composition.

Measurement of 30-second Swelling Height

The swelling height of each water-absorbent resin composition was measured with the swelling height measurement apparatus X shown in Fig. 1. The swelling height measurement apparatus X shown in Fig. 1 includes a movement distance measurement apparatus 1, a concave circular cup 2 (height: 45 mm, outer diameter: 90 mm, depth of the concave portion: 40 mm, inner diameter of the concave portion: 80 mm), a plastic convex circular cylinder 3 (outside diameter: 79 mm; 60 through-holes 7 with a diameter of 2 mm are uniformly formed on the surface in contact with the water-absorbent resin composition), and a nonwoven fabric 4 (liquid-permeable nonwoven fabric with a basis weight of 11 g/m$^2$). The swelling height measurement apparatus X can measure a change in movement distance of the convex circular cylinder 3 in 0.01 mm increments using a laser beam 6. The concave circular cup 2 can uniformly disperse a predetermined amount of water-absorbent resin composition. The convex circular cylinder 3 can uniformly apply a load of 90 g to a water-absorbent resin composition 5, which is a sample.

First, 0.2 g of a sample (water-absorbent resin composition 5) was uniformly sprayed over the concave circular cup 2, and the nonwoven fabric 4 was spread thereon. The convex circular cylinder 3 was gently placed on the nonwoven fabric 4 and arranged so that the laser beam 6 of the sensor of the movement distance measurement apparatus 1 could illuminate the center portion of the cylinder 3. Ion-exchanged water previously adjusted to 20°C was poured into the concave circular cup 2 through the through-holes 7 of the convex circular cylinder 3 to cause the water-absorbent resin composition 5 to swell. The time when the laser detects that the convex circular cylinder 3 is pushed up due to swelling of the water-absorbent resin composition 5 was defined as the start of water absorption (0 seconds) (automatic measurement starts when the convex circular cylinder 3 is displaced by 0.5 mm), and the movement degree of the convex circular cylinder 3 pushed up due to swelling of the water-absorbent resin composition 5 (the amount of change in the position of the convex circular cylinder 3 in the direction perpendicular to the bottom surface of the concave portion of the concave circular cup 2) was measured. The level of ion-exchanged water was checked every 3 seconds from the start of pouring ion-exchanged water, and ion-exchanged water was continued to be intermittently poured so as to maintain the water surface near the height of the flat surface of the flat portion of the convex circular cylinder 3. The movement degree of the convex circular cylinder 3 thirty seconds after the moment of the start of water absorption by the water-absorbent resin composition 5 (more precisely, the moment when the cylinder 3 was pushed up by 0.5 mm upon absorption of a trace of ion-exchanged water by the water-absorbent resin composition) (including the height to which the cylinder 3 was pushed up (0.5 mm) at the moment of the start of water absorption) was recorded as the "30-second swelling height."

Measurement of Gel Viscosity Retention; Evaluation of Heat Resistance

The gel viscosity of each water-absorbent resin composition was determined by adjusting the temperature of the swollen gel to 25±0.5°C, and making measurement using a Brookfield rotational viscometer (VDH2-type Vismetron viscometer produced by Shibaura System Co. Ltd., spindle rotor No. 5, rotation speed: 10 rpm). In this gel viscosity measurement, the gel was placed to a height of 65 mm in a 200 mL glass beaker with an inner diameter of 64 mm φ.
100 g of ion-exchanged water was added to a 200 mL beaker and stirred at 600 rpm using a magnetic stirrer bar (cylindrical, diameter 8 mm × length 30 mm, without a ring). 2.0 g of each water-absorbent resin composition was placed into the vortex created by this stirring, the mixture was stirred until the magnetic stirrer stopped due to the gel formed. This operation was performed twice in total to obtain a swollen gel corresponding to 4.0 g of the water-absorbent resin composition before swelling. 200 g of the thus-obtained swollen gel was then immediately placed into a 250 mL glass heat-resistant bottle with a bottom outer diameter of 70 mm φ and a mouth outer diameter of 42 mm φ and allowed to stand in a hot-air dryer (produced by ADVANTEC, FV-320) at 90±2°C. The viscosity of the swollen gel after a lapse of 2 days and 4 days was measured, and the gel viscosity retention S was calculated according to the following formula (I) and used as an index of heat resistance.

$$\text{Gel viscosity retention S = B/A} \quad \text{(I)}$$

(wherein A represents the gel viscosity after 2 days (mPa·s), and B represents the gel viscosity after 4 days (mPa·s)).

Table 1

| Example/ Comparative Example | Gel viscosity (after 2 days) (mPa·s) | Gel viscosity (after 4 days) (mPa·s) | Gel viscosity retention (heat resistance) |
|---|---|---|---|
| Example 1 | 27920 | 20080 | 72% |
| Example 2 | 32840 | 23560 | 72% |
| Example 3 | 28000 | 18400 | 66% |
| Example 4 | 23800 | 25200 | 106% |
| Example 5 | 43300 | 38800 | 90% |
| Example 6 | 42500 | 32960 | 78% |
| Example 7 | 49600 | 36800 | 74% |
| Example 8 | 84600 | 56700 | 67% |
| Example 9 | 88100 | 51300 | 58% |
| Example 10 | 26600 | 10800 | 41% |
| Example 11 | 25160 | 21080 | 84% |
| Example 12 | 25160 | 20040 | 80% |

(continued)

| Example/ Comparative Example | Gel viscosity (after 2 days) (mPa·s) | Gel viscosity (after 4 days) (mPa·s) | Gel viscosity retention (heat resistance) |
|---|---|---|---|
| Comparative Example 1 | 8080 | 1440 | 18% |
| Comparative Example 2 | 9200 | 1040 | 11% |

Table 1 shows evaluation results of the water-absorbent resin compositions obtained in the Examples and the Comparative Examples. It was confirmed that the water-absorbent resin compositions obtained in the Examples maintained a good gel state under heating conditions at 90°C. These results show that the water-absorbent resin compositions obtained in the Examples have excellent heat resistance in a swollen state and support the fact that the gel state can be maintained for a long period of time even in an environment in which power cables are used or in a similar environment.

The above results indicates that the water-absorbent resin compositions obtained in the Examples have excellent heat resistance in a swollen state and can be suitably used for water-blocking materials.

**Claims**

1. A water-absorbent resin composition comprising:

   water-absorbent resin particles; and
   a phosphonic acid-based chelating agent,
   the phosphonic acid-based chelating agent being contained in an amount of 0.01 to 40 $\mu$mol per gram of the water-absorbent resin particles.

2. The water-absorbent resin composition according to claim 1, which has a 30-second swelling height of 6.0 mm or more.

3. A water-blocking material comprising the water-absorbent resin composition of claim 1 or 2.

4. A cable comprising the water-blocking material of claim 3.

Fig. 1

## INTERNATIONAL SEARCH REPORT

| International application No. |
| --- |
| **PCT/JP2023/034413** |

| A. | CLASSIFICATION OF SUBJECT MATTER |
| --- | --- |

*C08L 101/14*(2006.01)i; *C08K 5/5317*(2006.01)i; *H01B 7/288*(2006.01)i
FI:    C08L101/14; C08K5/5317; H01B7/288

According to International Patent Classification (IPC) or to both national classification and IPC

| B. | FIELDS SEARCHED |
| --- | --- |

Minimum documentation searched (classification system followed by classification symbols)

C08L101/14; C08K5/5317; H01B7/288

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| X | JP 2014-73448 A (NIPPON SHOKUBAI CO., LTD.) 24 April 2014 (2014-04-24) | 1-4 |
|   | example 1, paragraph [0311] |   |
| Y |   | 3, 4 |
| X | WO 2012/133734 A1 (NIPPON SHOKUBAI CO., LTD.) 04 October 2012 (2012-10-04) | 1-4 |
|   | claims 1, 13-16, examples 1-27, paragraphs [0016], [0409] |   |
| Y |   | 3, 4 |
| X | JP 1-275661 A (KAO CORP.) 06 November 1989 (1989-11-06) | 1-3 |
|   | claims, examples 1-6, p. 5, lower right column, lines 1-8 |   |
| Y |   | 4 |
| X | WO 2013/073682 A1 (NIPPON SHOKUBAI CO., LTD.) 23 May 2013 (2013-05-23) | 1, 2 |
|   | examples 1-6 |   |
| Y |   | 3, 4 |

✓ Further documents are listed in the continuation of Box C.      ✓ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **26 October 2023** | **07 November 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** |  |
|  | Telephone No. |

Form PCT/ISA/210 (second sheet) (January 2015)

## INTERNATIONAL SEARCH REPORT

International application No.

**PCT/JP2023/034413**

### C. DOCUMENTS CONSIDERED TO BE RELEVANT

| Category* | Citation of document, with indication, where appropriate, of the relevant passages | Relevant to claim No. |
|---|---|---|
| X | JP 2015-83693 A (NIPPON SHOKUBAI CO., LTD.) 30 April 2015 (2015-04-30) comparative examples 2, 9, paragraphs [0276]-[0280], [0312]-[0315], [0326] | 1, 2 |
| Y | | 3, 4 |

Form PCT/ISA/210 (second sheet) (January 2015)

INTERNATIONAL SEARCH REPORT
Information on patent family members

International application No.

**PCT/JP2023/034413**

| Patent document cited in search report | | | Publication date (day/month/year) | Patent family member(s) | | | Publication date (day/month/year) |
|---|---|---|---|---|---|---|---|
| JP | 2014-73448 | A | 24 April 2014 | (Family: none) | | | |
| WO | 2012/133734 | A1 | 04 October 2012 | (Family: none) | | | |
| JP | 1-275661 | A | 06 November 1989 | (Family: none) | | | |
| WO | 2013/073682 | A1 | 23 May 2013 | US<br>examples 1-6<br>CN | 2014/0371400<br><br>103946248 | A1<br><br>A | |
| JP | 2015-83693 | A | 30 April 2015 | US<br>comparative examples 2, 9,<br>paragraphs [0490]-[0493],<br>[0525]-[0528], [0536]<br>EP<br>CN<br>KR 10-2013-0093477 | 2013/0026412<br><br><br><br>2557095<br>102822209<br> | A1<br><br><br><br>A1<br>A<br>A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014147281 A